# FASCICULE DE BREVET EUROPEEN

(11) **EP 0 480 802 B1**
(45) Date de publication et mention de la délivrance du brevet: **06.09.1995**
(21) Numéro de dépôt: 91402649.7
(22) Date de dépôt: 04.10.1991
(51) Int. Cl.: H01B 13/00

(54) **Procédé et machine de marquage d'un câble électrique**
Kennzeichnungsverfahren und -Maschine für ein elektrisches Kabel
An electrical cable marking process and machine

(30) Priorité: 11.10.1990 FR 9012535
(43) Date de publication de la demande: 15.04.1992
(73) Titulaire: AEROSPATIALE Société Nationale Industrielle, 75781 Paris Cédex 16 (FR)
(72) Inventeur: Carrière, Pierre, F-31400 Toulouse (FR); Record, Philippe, F-31700 Blagnac (FR); Dabadie, Vincent, F-31300 Toulouse (FR); Ballenghien, Jean-Luc, F-31700 Blagnac (FR)
(74) Mandataire: Bonnetat, Christian

(56) Documents cités:
- EP-A- 0 256 422
- EP-A- 0 436 221
- FR-A- 2 617 325
- FR-A- 2 648 270
- The Laser Guidebook, Jeff Hecht, McGraw-Hill Book Company, New York, 1986

## Description

La présente invention concerne un procédé de marquage d'un câble électrique, ainsi qu'une machine pour la mise en oeuvre de ce procédé.

Habituellement, l'impression des câbles électriques, notamment aéronautiques, s'effectue par frappe à chaud d'une matrice venant incruster une portion de ruban marqueur dans la couche externe du câble. Cette opération de marquage est réalisée à l'arrêt, ce qui fournit une vitesse moyenne de marquage de l'ordre de 20 cm/s.

Cependant, ce type de marquage présente un certain nombre d'inconvénients :
- il existe un risque de détérioration du câble, par entaille de l'isolant, ainsi qu'un risque d'effacement, dans le temps, du marquage ;
- ce marquage n'est pas applicable pour les câbles bifilaires torsadés blindés, gainés ;
- la vitesse de marquage est peu élevée en raison des arrêts systématiques pour chaque opération de marquage.

C'est pourquoi, on a envisagé, comme cela est par exemple décrit dans le document FR-A-2 617 325, de marquer un câble électrique en utilisant un laser. Dans ce cas, le câble, comportant une âme conductrice et un revêtement isolant, est recouvert de plus d'un vernis constitué d'une couche interne et d'une couche externe de couleurs contrastées. Le marquage s'effectue alors par ablation de la couche externe de vernis et, ainsi, apparition de la couche interne de contraste. Ladite couche externe de vernis peut être réalisée à base de polytétrafluoroéthylène et peut présenter une épaisseur comprise entre 10 et 20 micromètres.

Par ailleurs, par le document THE LASER GUIDEBOOK, HECHT J., MC GRAW-HILL BOOK COMPANY, NY, 1986, pp 146-149, on connaît un procédé de marquage d'un câble électrique mettant en oeuvre un laser CO₂ à impulsions.

Toutefois, une telle technique connue présente des difficultés. Tout d'abord, il faut s'assurer que le rayonnement laser atteigne ladite couche interne, sans jamais la dépasser, pour ne pas attaquer le revêtement isolant, ce qui aurait pour conséquence une détérioration inacceptable du câble. D'autres difficultés apparaissent si l'on désire marquer un câble électrique défilant en continu, caractère par caractère. De telles difficultés ont empêché, jusqu'à présent, la mise en pratique efficace de cette technique.

La présente invention a pour but d'éviter ces inconvénients, et concerne un procédé permettant de marquer caractère par caractère, de façon fiable et reproductible, un câble électrique défilant en continu, sans risquer d'endommager ce dernier.

A cet effet, selon l'invention, le procédé pour le marquage de caractères sur un câble électrique, défilant en continu et comportant une âme conductrice, un revêtement isolant, et un vernis constitué d'une couche interne et d'une couche externe de couleurs contrastées, par ablation de la couche externe dudit vernis, à l'aide d'un faisceau de marquage provenant d'un laser CO₂, ladite couche externe de vernis étant réalisée à base de polytétrafluoroéthylène et ayant une épaisseur comprise entre 10 et 20 micromètres, est caractérisé en ce que ledit laser CO₂ est du type à impulsions, en ce qu'on règle la puissance dudit laser de façon à obtenir, au niveau de la couche externe du vernis, une densité d'énergie comprise entre 8 et 15 J/cm², en ce que l'on fait passer ledit faisceau de marquage à travers un masque dans lequel sont usinés lesdits caractères et en ce que ledit faisceau de marquage peut balayer, parallèlement à la direction de défilement dudit câble électrique.

Ainsi, en utilisant un laser CO₂ à impulsions dont la puissance est réglée de façon à obtenir, au niveau de la couche externe du vernis, la plage de densités d'énergie indiquée, on garantit, d'une part, l'ablation de la couche externe du vernis, et donc un marquage net du câble et, d'autre part, que la couche interne ne soit pas totalement enlevée, en assurant ainsi, a fortiori l'intégrité du revêtement isolant. De plus, grâce à la possibilité de balayage du faisceau laser de marquage, on peut compenser l'effet des variations de la vitesse de défilement du câble sur la position de chaque caractère sur ledit câble. Il est à noter de plus qu'un tel procédé s'applique aussi bien aux câbles monofilaires que bifilaires torsadés blindés.

Une plage de densités d'énergie de 10 à 13 J/cm² est préférée. Parmi ces valeurs, une valeur au moins approximativement égale à 11 J/cm² fournit des résultats particulièrement favorables.

Avantageusement, la vitesse de défilement du câble est comprise entre 0,1 et 1 m/s, et est, de préférence, au moins approximativement égale à 0,5 m/s.

La valeur maximale de 1 m/s de la vitesse de défilement du câble est compatible avec un marquage parfaitement clair, compte tenu du temps d'exposition du laser (de l'ordre de 0,1 microseconde) et de la fréquence à laquelle celui-ci travaille.

La présente invention concerne également une machine pour le marquage de caractères sur un câble électrique, pour la mise en oeuvre du procédé ci-dessus, comportant des moyens d'entraînement du câble pour entraîner celui-ci en défilement, cette machine étant caractérisée en ce qu'elle comprend :
- un laser CO₂ à impulsions émettant un faisceau de marquage dont la puissance est réglée pour obtenir, au niveau de la couche externe de vernis du câble, une densité d'énergie comprise entre 8 et 15 J/cm²,
- des moyens de guidage du câble au voisinage du point d'impact dudit faisceau sur celui-ci,
- un masque dans lequel sont usinés lesdits caractères et qui est disposé sur le trajet dudit faisceau de marquage ;
- des moyens de balayage dudit faisceau, parallèlement à la direction de défilement du câble ; et
- des moyens informatiques de pilotage.

Avantageusement, lesdits moyens de guidage du câble comprennent une paire de mâchoires mobiles guidant latéralement le câble en fonction des différentes jauges des câbles à marquer, et deux poulies à fond plat permettant de maintenir la surface du câble à marquer à un même niveau quel que soit le diamètre du câble.

Par ailleurs, la machine peut comprendre des moyens de détection des raccordements entre plusieurs longueurs de câble et des défauts éventuels de ce dernier, disposés en amont dudit laser. En particulier, lesdits moyens de détection comprennent un laser associé à une cellule photoélectrique.

Avantageusement, la machine peut comprendre des moyens pour mesurer l'effort exercé sur le câble et amortir des accélérations importantes de ce dernier, et/ou des moyens pour couper le câble, disposés en aval desdits moyens d'entraînement.

De préférence, ledit masque est réalisé sous la forme de disque rotatif et lesdits moyens de balayage comprennent un miroir pivotant.

Les figures du dessin annexé feront bien comprendre comment l'invention peut être réalisée.

La figure 1 est une vue schématique en perspective d'un exemple de réalisation d'une machine pour la mise en oeuvre du procédé de l'invention.

La figure 2 illustre, plus en détail, l'agencement du laser de la machine de la figure 1.

La figure 3 est une coupe longitudinale d'un tronçon de câble marqué au laser.

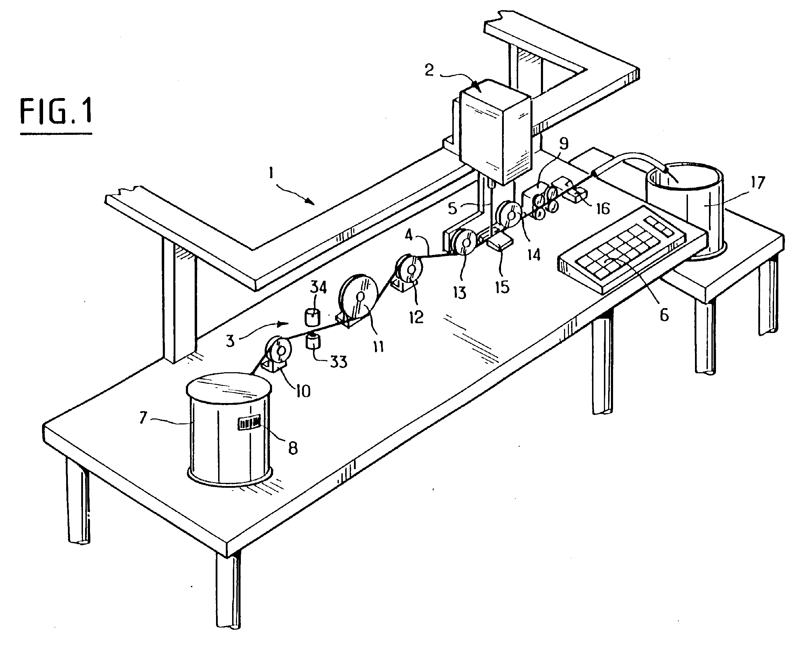

On a représenté schématiquement en perspective sur la figure 1, une machine 1 pour la mise en oeuvre du procédé de l'invention. La machine 1 comporte, de façon générale, une unité laser 2, un dispositif 3 permettant de faire défiler un câble 4 à marquer devant le faisceau 5 de rayonnement laser, et une unité de pilotage informatique 6.

Plus précisément, le dispositif 3 comporte une bobine de câble 7, présentant une étiquette à code à barres 8 fournissant, entre autres informations, le type et la jauge du câble 4. La machine ne pourra commencer à dévider le câble qu'après saisie de ces données par crayon optique, saisie qui fournira la validation nécessaire. Par ailleurs, le dispositif 3 comprend des moyens d'entraînement 9, de tout type approprié, du câble 4, les moyens d'entraînement étant contrôlés par un codeur rotatif 11 dont le rôle sera explicité par la suite. En outre, deux poulies à fond plat 13,14 permettent de maintenir la surface à marquer à un même niveau, quel que soit le diamètre du câble. Entre les deux poulies 13,14, est prévu un support 15 de guidage du câble, constitué de deux mâchoires mobiles s'adaptant automatiquement aux différentes jauges des câbles à marquer pour les guider latéralement. En aval des moyens d'entraînement 9, sont prévus un coupe-câble 16, qui assure une coupe nette ne nécessitant aucune reprise par la suite, et un réceptacle 17 des câbles marqués et coupés.

L'effort exercé sur le câble est mesuré en permanence par un capteur de traction 12, et les accélérations importantes du câble sont amorties par un amortisseur de compensation 10. Les raccordements entre plusieurs longueurs de câble (olives de raccordement), ainsi que les défauts éventuels (comme des noeuds) sont détectés à l'aide d'un petit laser 33 qui, émettant sur une cellule photoélectrique 34, peut mesurer en permanence une différence de diamètre et stopper le défilement du câble.

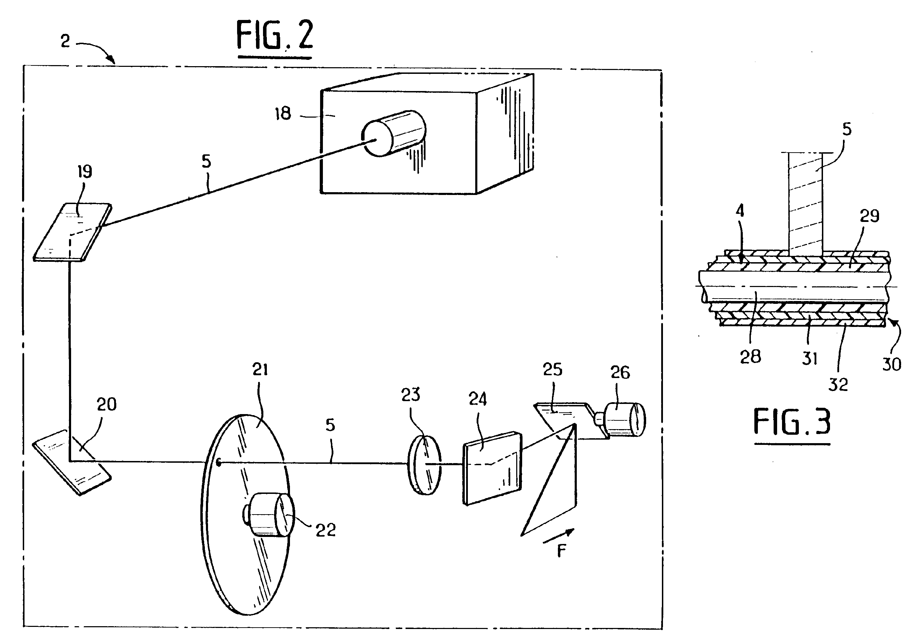

La figure 2 représente schématiquement l'unité laser 2. Cette dernière comporte le laser proprement dit 18, qui est un laser CO₂ à impulsions, de récurrence 100 Hz, de longueur d'onde λ = 10,6 micromètres, un système de miroirs 19,20,24 de renvoi du faisceau 5 du rayonnement laser, et un disque rotatif 21, jouant le rôle de masque, animé par un moteur 22. Le disque rotatif peut comporter deux séries de caractères (pour les petites jauges et les grandes jauges), distribuées de façon radialement espacée, et reproduites un certain nombre de fois (par exemple douze) afin de minimiser le déplacement du disque entre deux caractères, et donc la vitesse de rotation. Cette dernière est synchronisée avec la fréquence du laser. Le passage d'une série de caractères à l'autre s'effectue par pivotement d'un miroir de renvoi du faisceau. Pour des raisons de clarté du dessin, ces séries de caractères n'ont pas été représentées sur le disque 21.

En aval du disque 21 dans le sens de propagation du faisceau 5, on prévoit, après une lentille 23, un miroir pivotant 25, commandé par un moteur 26, permettant le balayage du faisceau 5 parallèlement au défilement du câble 4 (flèche F).

Un câble 4, qui peut être marqué par le procédé de l'invention, est représenté schématiquement sur la figure 3. Le câble 4 comporte une âme conductrice 28, un revêtement isolant 29, et un vernis 30 constitué d'une couche interne 31 et d'une couche externe 32 de couleurs contrastées. La couche interne peut être sombre et la couche externe claire, ou inversement. L'une et l'autre de ces couches peuvent être réalisées en Téflon (marque déposée), soit le polytétrafluoroéthylène (PTFE), soit le polytétrafluoroéthylène-propylène (FEP). La couche interne 31 peut avoir une épaisseur comprise entre 25 et 30 micromètres, et la couche externe 32 une épaisseur comprise entre 10 et 20 micromètres. Les couleurs des couches interne et externe peuvent être obtenues à l'aide d'un ajout de pigments appropriés.

Comme déjà indiqué, au cours de l'opération de marquage, la puissance du laser est réglée, par régulation de la haute tension du laser, de façon à obtenir, au niveau de la couche externe 32 de vernis 30 du câble 4, une densité d'énergie comprise entre 8 et 15 J/cm², avantageusement entre 10 et 13 J/cm², une valeur de 11 J/cm² étant la plus préférée.

Ces valeurs garantissent, d'une part, l'ablation de la couche externe 32 du vernis 30, et donc un marquage net du câble, et, d'autre part, que la couche interne 31 ne soit pas totalement enlevée, en assurant ainsi, a fortiori, l'intégrité du revêtement isolant 29.

L'unité informatique de pilotage 6 permet de commander le défilement du câble, à l'aide du codeur rotatif, et l'arrêt du marquage, notamment lorsque les plages de valeurs indiquées ci-dessus risquent d'être dépassées. Par ailleurs, elle sélectionne les caractères à marquer sur un câble, ou portion de câble, déterminé, et chaque caractère automatiquement sélectionné est ainsi marqué sur le câble par ablation de la couche externe claire du vernis et apparition de la couche interne sombre. Elle permet en outre de commander le positionnement des mâchoires 15 en fonction de la jauge du câble 4, et la découpe du câble à une longueur souhaitée.

La machine de l'invention assure un marquage net d'un câble électrique, sans risque d'endommager celui-ci, et cela à une vitesse maximale de défilement du câble de 1 m/s, compte tenu du temps d'exposition du laser et de la fréquence à laquelle celui-ci travaille.

## Revendications

1. Procédé pour le marquage de caractères sur un câble électrique, défilant en continu et comportant une âme conductrice, un revêtement isolant, et un vernis constitué d'une couche interne et d'une couche externe de couleurs contrastées, par ablation de la couche externe dudit vernis, à l'aide d'un faisceau (5) de marquage provenant d'un laser CO₂, ladite couche externe de vernis étant réalisée à base de polytétrafluoroéthylène et ayant une épaisseur comprise entre 10 et 20 micromètres,
caractérisé en ce que ledit laser CO₂ est du type à impulsions, en ce qu'on règle la puissance dudit laser de façon à obtenir, au niveau de la couche externe du vernis, une densité d'énergie comprise entre 8 et 15 J/cm², en ce que l'on fait passer ledit faisceau de marquage à travers un masque dans lequel sont usinés lesdits caractères et en ce que ledit faisceau de marquage peut balayer, parallèlement à la direction de défilement (F) dudit câble électrique.

2. Procédé selon la revendication 1,
caractérisé en ce que la densité d'énergie est comprise entre 10 et 13 J/cm².

3. Procédé selon la revendication 2,
caractérisé en ce que la densité d'énergie est au moins approximativement égale à 11 J/cm².

4. Procédé selon l'une quelconque des revendications 1 à 3,
caractérisé en ce que la vitesse de défilement du câble est comprise entre 0,1 et 1 m/s.

5. Procédé selon la revendication 4,
caractérisé en ce que la vitesse de défilement du câble est au moins approximativement égale à 0,5 m/s.

6. Machine pour le marquage de caractères sur un câble électrique, pour la mise en oeuvre du procédé selon l'une quelconque des revendications 1 à 5, comportant des moyens d'entraînement (9) du câble (4) pour entraîner celui-ci en défilement et comportant un laser CO₂
caractérisée en ce que :
- ledit laser CO₂ est un laser CO₂ à impulsions (2) émettant un faisceau de marquage dont la puissance est réglée pour obtenir, au niveau de la couche externe de vernis du câble, une densité d'énergie comprise entre 8 et 15 J/cm², et en ce que la dit machine comprend
- des moyens de guidage (13,14,15) du câble (4) au voisinage du point d'impact dudit faisceau (5) sur celui-ci,
- un masque (21) dans lequel son usinés lesdits caractères et qui est disposé sur le trajet dudit faisceau de marquage ;
- des moyens (25,26) de balayage dudit faisceau, parallèlement à la direction de défilement (F) du câble (4) ; et
- des moyens informatiques de pilotage (6).

7. Machine selon la revendication 6,
caractérisée en ce que lesdits moyens de guidage du câble comprennent une paire de mâchoires mobiles (15) guidant latéralement le câble (4) en fonction des différentes jauges des câbles à marquer, et deux poulies à fond plat (13,14) permettant de maintenir la surface du câble (4) à marquer à un même niveau quel que soit le diamètre du câble.

8. Machine selon l'une des revendications 6 ou 7,
caractérisée en ce qu'elle comprend des moyens de détection (33,34) des raccordements entre plusieurs longueurs de câble et des défauts éventuels de ce dernier, disposés en amont dudit laser (2).

9. Machine selon la revendication 8,
caractérisée en ce que lesdits moyens de détection comprennent un laser (33) associé à une cellule photoélectrique (34).

10. Machine selon l'une quelconque des revendications 6 à 9,
caractérisée en ce qu'elle comprend des moyens (12,10) pour mesurer l'effort exercé sur le câble (4) et amortir des accélérations importantes de ce dernier.

11. Machine selon l'une quelconque des revendications 6 à 10,
caractérisée en ce qu'elle comprend des moyens (16) pour couper le câble (4), disposés en aval desdits moyens d'entraînement (9).

12. Machine selon l'une quelconque des revendications 6 à 11,
caractérisée en ce que ledit masque est réalisé sous forme de disque rotatif (21).

13. Machine selon l'une quelconque des revendications 6 à 12,
caractérisée en ce que lesdits moyens de balayage comprennent un miroir pivotant (25).

## Patentansprüche

1. Verfahren zur Markierung von Zeichen auf einem elektrischen Kabel mit kontinuierlichem Vorschub, mit einem Leiter, einer Isolierhülle und einer aus einer Innenschicht und einer Außenschicht in kontrastierenden Farben bestehenden Lackierung durch Abschmelzen der Außenschicht der Lackierung mit einem Markierungsbündel (5) eines CO₂-Lasers, wobei die äußere Lackschicht auf der Grundlage von Polytetrafluorethylen hergestellt wird und eine Dicke zwischen 10 und 20 Mikrometern hat,
dadurch gekennzeichnet, daß der CO₂-Laser von der Art eines Impulslasers ist, und dadurch, daß die Leistung des Lasers so geregelt wird, daß im Bereich der Außenschicht der Lackierung eine Energiedichte zwischen 8 und 15 J/cm² erzielt wird, dadurch, daß das Markierungsbündel durch eine Maske verläuft, in die die Zeichen eingearbeitet sind, und dadurch, daß das Markierungsbündel parallel zur Vorschubrichtung (F) des elektrischen Kabels eine Abtastung durchführen kann.

2. Verfahren nach Anspruch 1,
dadurch gekennzeichnet, daß die Energiedichte zwischen 10 und 13 J/cm² liegt.

3. Verfahren nach Anspruch 2,
dadurch gekennzeichnet, daß die Energiedichte mindestens annähernd gleich 11 J/cm² ist.

4. Verfahren nach einem der Ansprüche 1 bis 3,
dadurch gekennzeichnet, daß die Vorschubgeschwindigkeit des Kabels zwischen 0,1 und 1 m/s liegt.

5. Verfahren nach Anspruch 4,
dadurch gekennzeichnet, daß die Vorschubgeschwindigkeit des Kabels mindestens annähernd gleich 0,5 m/s ist.

6. Maschine zur Markierung von Zeichen auf einem elektrischen Kabel, mit der das Verfahren nach einem der Ansprüche 1 bis 5 angewendet werden kann, mit Antriebsmitteln (9) des Kabels (4), mit denen diesem eine Vorschubewegung aufgegeben werden kann, und einem CO₂-Laser,
dadurch gekennzeichnet, daß:
- der CO₂-Laser ein CO₂-Impulslaser (2) ist, der ein Markierungsbündel abgibt, dessen Leistung so geregelt wird, daß sich im Bereich der äußeren Lackschicht des Kabels eine Energiedichte zwischen 8 und 15 J/cm² und dadurch, daß die Maschine umfaßt:
- Führungsmittel (13,14,15) des Kabels (4) in der Nähe der Stelle, an der das Bündel (5) auf dieses auftrifft,
- eine Maske (21), in die die Zeichen eingearbeitet sind und die im Strahlengang des Markierungsbündels angeordnet ist;
- Mittel (25,26) zum Abtasten des Bündels parallel zur Vorschubrichtung (F) von Kabel (4) und
- elektronische Steuermittel (6).

7. Maschine nach Anspruch 6,
dadurch gekennzeichnet, daß die Führungsmittel des Kabels ein Paar beweglicher Backen (15) zur seitlichen Führung von Kabel (4) in Abhängigkeit von den unterschiedlichen Dicken der zu markierenden Kabel und zwei Flachbodenrollen (13,14) haben, mit denen die Oberfläche des zu markierenden Kabels (4) unabhängig vom Durchmesser des Kabels in gleicher Höhe gehalten werden kann.

8. Maschine nach einem der Ansprüche 6 oder 7,
dadurch gekennzeichnet, daß sie Mittel (33,34) zum Nachweis von Verbindungen zwischen mehreren Kabellängen und eventueller Kabelfehler hat, die vor dem Laser (2) angeordnet sind.

9. Maschine nach Anspruch 8,
dadurch gekennzeichnet, daß die Nachweismittel einen Laser (33) in Verbindung mit einer Photozelle (34) haben.

10. Maschine nach einem der Ansprüche 6 bis 9,
dadurch gekennzeichnet, daß sie Mittel (12,10) hat, mit denen die auf das Kabel (4) ausgeübte Belastung gemessen und hohe Beschleunigungen desselben gedämpft werden können.

11. Maschine nach einem der Ansprüche 6 bis 10,
dadurch gekennzeichnet, daß sie Mittel (16) hat, mit denen das Kabel (4) getrennt werden kann und die hinter den Antriebsmitteln (9) angeordnet sind.

12. Maschine nach einem der Ansprüche 6 bis 11,
dadurch gekennzeichnet, daß die Maske die Form einer Drehscheibe (21) hat.

13. Maschine nach einem der Ansprüche 6 bis 12,
dadurch gekennzeichnet, daß die Abtastmittel einen schwenkbaren Spiegel (25) haben.

## Claims

1. Process for the marking of characters on a continuously running electrical cable, composed of a conducting core, an insulating jacket and a varnish consisting of an inner layer and an outer layer of contrasted colours, by ablation of the outer layer of the said varnish with the aid of a marking beam (5) coming from a CO₂ laser, the said outer varnish layer being based on polytetrafluoroethylene and having a thickness of between 10 and 20 micrometres, characterized in that the said CO₂ laser is of the pulsed type, in that the power of the said laser is adjusted so as to obtain, in the region of the outer layer of the varnish, an energy density of between 8 and 15 J/cm², in that the said marking beam is made to pass through a mask into which the said characters are machined and in that the said marking beam can scan, parallel to the direction (F) in which the said electrical cable runs.

2. Process according to Claim 1, characterized in that the energy density is between 10 and 13 J/cm².

3. Process according to Claim 2, characterized in that the energy density is at least approximately equal to 11 J/cm².

4. Process according to any one of Claims 1 to 3, characterized in that the run speed of the cable is between 0.1 and 1 m/s.

5. Process according to Claim 4, characterized in that the run speed of the cable is at least approximately equal to 0.5 m/s.

6. Machine for the marking of characters on an electrical cable, for the implementation of the process according to any one of Claims 1 to 5, including means (9) for driving the cable (4) in order to drive this in a running motion and including a CO₂ laser, characterized in that:
- the said CO₂ laser is a pulsed CO₂ laser (2) emitting a marking beam, the power of which is adjusted in order to obtain, in the region of the outer varnish layer of the cable, an energy density of between 8 and 15 J/cm², and in that the said machine comprises
- means (13,14,15) for guiding the cable (4) in the vicinity of the point of impact of the said beam (5) on it;
- a mask (21), into which the said characters are machined, which is arranged in the path of the said marking beam;
- means (25,26) for scanning the said beam, parallel to the direction (F) in which the cable (4) runs; and
- computer control means (6).

7. Machine according to Claim 6, characterized in that the said means for guiding the cable comprise a pair of movable jaws (15), which guide the cable (4) laterally as a function of the various gauges of the cables to be marked, and two flat-bottomed pulleys (13,14) making it possible to keep the surface of the cable (4) to be marked at the same level, irrespective of the diameter of the cable.

8. Machine according to one of Claims 6 and 7, characterized in that it comprises means (33,34) for detecting the splices between several lengths of cable and possible defects in the latter, these means being arranged upstream of the said laser (2).

9. Machine according to Claim 8, characterized in that the said detection means comprise a laser (33) associated with a photoelectric cell (34).

10. Machine according to any one of Claims 6 to 9, characterized in that it comprises means (12,10) for measuring the force exerted on the cable (4) and for damping significant accelerations of the latter.

11. Machine according to any one of Claims 6 to 10, characterized in that it comprises means (16) for cutting the cable (4), these being arranged downstream of the said driving means (9).

12. Machine according to any one of Claims 6 to 11, characterized in that the said mask is made in the form of a rotary disc (21).

13. Machine according to any one of Claims 6 to 12, characterized in that the said scanning means comprise a pivoting mirror (25).
